# EUROPEAN PATENT SPECIFICATION

(11) **EP 4 108 391 B1**
(45) Date of publication and mention of the grant of the patent: **30.04.2025**
(21) Application number: 21774666.8
(22) Date of filing: 22.03.2021
(51) Int. Cl.: G05D 1/00, B25J 9/16, B25J 11/00

(54) **ROBOT CONTROL SYSTEM, ROBOT CONTROL METHOD, AND WIRELESS CALL DEVICE**
ROBOTERSTEUERUNGSSYSTEM, ROBOTERSTEUERUNGSVERFAHREN UND DRAHTLOSE ANRUFVORRICHTUNG
SYSTÈME DE COMMANDE DE ROBOT, PROCÉDÉ DE COMMANDE DE ROBOT ET DISPOSITIF D'APPEL SANS FIL

(30) Priority: 25.03.2020 KR 20200036487; 15.03.2021 KR 20210033119
(43) Date of publication of application: 28.12.2022
(73) Proprietor: B-ROBOTICS CO., LTD., Seoul 05840 (KR)
(72) Inventor: KIM, Myung Sik, Suwon-si, Gyeonggi-do 16509 (KR); LIM, Ji Won, Seoul 05224 (KR); KIM, Min Soo, Seoul 05349 (KR)
(74) Representative: Flügel Preissner Schober Seidel
(86) International application number: PCT/KR2021/003507
(87) International publication number: WO 2021/194193

(56) References cited:
- WO-A1-2019/054205
- JP-A- 2001 300 876
- KR-A- 20090 104 390
- KR-A- 20100 110 143
- KR-A- 20190 100 093
- US-A1- 2019 106 149

## Description

### Technical Field

The following description relates to a robot control system, a robot control method, and a wireless call device for calling a robot equipped with the robot control system. More particularly, the following description relates to a system and method for allowing a serving robot operated in a store to easily change a stop position or an autonomous traveling path thereof and allowing a user or a store employee to easily call the serving robot.

### Background Art

With development of autonomous driving and robot technology, research is being actively conducted to serve food in stores such as restaurants with a serving robot. The serving robot travels along a predetermined path in a store on behalf of a person, or recognizes obstacles on the traveling path, loads cooked food, and serves customers. Such a serving robot is mainly provided in a food service establishment (hereinafter referred to as a "store") to perform predetermined functions. To this end, the serving robot creates a map including a moving route within the store, and the stop position and direction of the serving robot are specified in advance.

However, if the layout is changed or the position of tables is moved depending on circumstances of the store, a route along which the serving robot moves for serving or a position where the serving robot will stop is also changed, and there is a risk of causing a malfunction of the serving robot. Conventionally, in order to change the movement path or stop position of the serving robot, there has been only a way to re-designate it using a dedicated program or change it remotely through a service server. Accordingly, there is an issue in that it is difficult to quickly respond to the needs of the store, resulting in service disruption.

In addition, when a customer finishes eating and moves dishes to a tray return station or when a store clerk cleans the table after meals, loading empty dishes on the serving robot may improve convenience and safety compared to the conventional case where a person directly transports the dishes by hand. To this end, it is necessary to call the serving robot at a time desired by the customer or the clerk. According to a related art, there is an issue in that utilization of the serving robot is lowered due to insufficiency of such a call function.

US 2019/0106149 A1 discloses a driving support control system that includes a steering device and a control device. The control device performs a target value calculating process of calculating a target value; a first steering angle calculating process of calculating, as a first steering angle, a steering angle for causing a vehicle motion parameter to coincide with the target value; an actual value calculating process of calculating an actual value of the vehicle motion parameter; a second steering angle calculating process of calculating, as a second steering angle, a steering angle for cancelling out an external force based on a difference value between the actual value and the target value; a target steering angle calculating process of calculating, as a target steering angle, a summed value of the first and second steering angles; and a control process of controlling the steering device so that the steering angle coincides with the target steering angle.

There is a need for a technical idea that allows a simple and easy change of a movement path or a stop position of the serving robot in the store.

Further, a technical idea is required to easily call a serving robot when necessary in addition to serving food.

### Disclosure of the Invention

### Technical Goals

An object to be solved by the present disclosure is to provide a technical idea that allows a simple and easy change of an autonomous traveling path or a stop position of a serving robot in a store.

In addition, an object of the present disclosure is to provide a technical idea that makes it easy to call the serving robot when the serving robot is needed, including serving of food.

### Technical Solutions

The invention is defined by the appended claims.

According to an aspect, there is provided a robot control system installed in a robot to control the robot, including: a control module configured to control the robot to move along a preconfigured autonomous traveling path in an autonomous traveling mode; a mode switching module configured to switch the robot from the autonomous traveling mode to a movement path reconfiguration mode when a predetermined switching condition is satisfied while the robot is in the autonomous traveling mode; and a configuration module configured to, when the robot is moved by an external force in the movement path reconfiguration mode, track a movement path while the robot is moved by the external force, and to reconfigure the autonomous traveling path based on the tracked movement path.

In an example embodiment, the mode switching module may be configured to switch the robot to the movement path reconfiguration mode when a movement path reconfiguration command is input through a predetermined input device installed in the robot while the robot is in the autonomous traveling mode.

In an example embodiment, the mode switching module may be configured to switch the robot to the movement path reconfiguration mode when the robot deviates from the autonomous traveling path by an external force a predetermined number of times or more or for a predetermined period of time or more while the robot is in the autonomous traveling mode.

In an example embodiment, the mode switching module may be configured to switch the robot to the movement path reconfiguration mode when the robot detects an obstacle that prevents movement while moving along the autonomous traveling path in the autonomous traveling mode.

In an example embodiment, the control module may be configured to control the robot to move to a preconfigured stop position when the robot is called in the autonomous traveling mode.

In an example embodiment, the control module may be configured to control the robot to move along the autonomous traveling path when a predetermined stop period of time elapses after the robot moves to the stop position, and extend the stop period of time when it is detected that the robot is loaded with an object.

According to another aspect, there is provided a robot control system installed in a robot to control the robot including: a control module configured to control the robot to move to a preconfigured stop position when the robot is called in an autonomous traveling mode; a mode switching module configured to switch the robot from the autonomous traveling mode to a stop position reconfiguration mode when a predetermined switching condition is satisfied while the robot is in the autonomous traveling mode; and a configuration module configured to, when the robot is moved by an external force in the stop position reconfiguration mode, determine a movement position to which the robot is moved by an external force, and reconfigure the stop position to the movement position.

In an example embodiment, the mode switching module may be configured to, when a stop position reconfiguration command is input through a predetermined input device installed in the robot while the robot is in the autonomous traveling mode, switch the robot to the stop position reconfiguration mode.

In an example embodiment, the mode switching module may be configured to switch the robot to the stop position reconfiguration mode when the robot deviates from the stop position by an external force a predetermined number of times or more or for a predetermined period of time or more after moving to the stop position.

In an example embodiment, the robot control system may switch the robot to the stop position reconfiguration mode when the robot detects an obstacle that prevents movement while moving to the stop position in the autonomous traveling mode.

In an example embodiment, the robot may be a serving robot for transporting food and beverage containers in a restaurant.

According to another aspect, there is provided a wireless call device for calling a robot equipped with the robot control system including: a call button; and a call module configured to transmit a call command including identification information corresponding to the wireless call device to the robot when the call button is pressed to control the robot to move to a stop position corresponding to the identification information.

In an example embodiment, the call module may be configured to transmit the call command to the robot when the call button is pressed a plurality of times long or short and a predetermined pattern is formed by a length of each press or a length of a time interval between presses.

According to another aspect, there is provided a wireless call device for calling a robot equipped with the robot control system including: a tag reader configured to recognize a tag located outside the wireless call device; and a call module configured to, when a tag is recognized by the tag reader, transmit a call command including identification information corresponding to the recognized tag to the robot to control the robot to move to a stop position corresponding to the identification information.

According to another aspect, there is provided a robot control method performed by a robot control system installed in a robot which controls the robot including: controlling the robot to move along a preconfigured autonomous traveling path in an autonomous traveling mode; switching the robot from the autonomous traveling mode to a movement path reconfiguration mode when a predetermined switching condition is satisfied while the robot is in the autonomous traveling mode; and when the robot is moved by an external force in the movement path reconfiguration mode, tracking a movement path while the robot is moved by the external force, and reconfiguring the autonomous traveling path based on the tracked movement path.

In an example embodiment, the switching of the robot from the autonomous traveling mode to the movement path reconfiguration mode when the predetermined switching condition is satisfied while the robot is in the autonomous traveling mode may include switching the robot to the movement path reconfiguration mode when a movement path reconfiguration command is input through a predetermined input device installed in the robot while the robot is in the autonomous traveling mode.

In an example embodiment, the switching of the robot from the autonomous traveling mode to the movement path reconfiguration mode when the predetermined switching condition is satisfied while the robot is in the autonomous traveling mode may include switching the robot to the movement path reconfiguration mode when the robot detects an obstacle that prevents movement while moving along the autonomous traveling path in the autonomous traveling mode.

In an example embodiment, the switching of the robot from the autonomous traveling mode to the movement path reconfiguration mode when the predetermined switching condition is satisfied while the robot is in the autonomous traveling mode may include switching the robot to the movement path reconfiguration mode when the robot deviates from the autonomous traveling path by an external force a predetermined number of times or more or for a predetermined period of time or more while the robot is in the autonomous traveling mode.

According to another aspect, there is provided a robot control method performed by a robot control system installed in a robot which controls the robot, including: controlling the robot to move to a preconfigured stop position when the robot is called in an autonomous traveling mode; switching the robot from the autonomous traveling mode to a stop position reconfiguration mode when a predetermined switching condition is satisfied while the robot is in the autonomous traveling mode; and when the robot is moved by an external force in the stop position reconfiguration mode, determining a movement position to which the robot is moved by an external force and reconfiguring the stop position to the movement position. According to another aspect, there is provided a computer program installed in a data processing apparatus and stored in a non-transitory recording medium to perform the method.

According to another aspect, there is provided a non-transitory computer-readable recording medium in which a computer program for performing the method.

### Advantageous Effects

According to an example embodiment of the present disclosure, it is possible to simply and easily change the movement path or stop position of the serving robot in the store, and to easily call the serving robot if necessary in addition to serving food, thereby greatly improving the user's convenience.

### Brief Description of Drawings

In order to more fully understand drawings recited in the detailed description of the Invention, a brief description of each drawing is provided.
FIG. 1 is a diagram illustrating a schematic configuration of a robot on which a robot control system according to an example embodiment is mounted, and FIG. 2 is a diagram for explaining a relationship between the robot and a wireless call device according to an example embodiment.
FIG. 3 is a block diagram illustrating a schematic configuration of a robot control system according to an example embodiment.
FIG. 4A is a diagram illustrating a preconfigured path along which a robot autonomously travels in a store equipped with a plurality of tables/chairs.
FIG. 4B is a diagram illustrating a case in which arrangement of tables/chairs in a store is changed and it is impossible to move to a part of the existing autonomous traveling path.
FIG. 4C is a diagram illustrating a path along which a robot is moved by an external force.
FIG. 4D is a diagram illustrating an example in which an autonomous traveling path is reconfigured.
FIg. 5 is a diagram for explaining a process of reconfiguring a stop position of a robot.
FIG. 6 is a flowchart illustrating a robot control method according to an example embodiment.
FIGS. 7A and 7B are diagrams, each of which illustrates an example of a wireless call device according to an example embodiment.

### Best Mode for Carrying Out the Invention

Since the present invention may be implemented in various forms and may have various example embodiments, specific example embodiments are illustrated in the drawings and described in detail.

Terms such as first, second, and the like may be used to explain various components, but the components should not be limited to the terms. The terms are used only to distinguishing one component from another component.

Terms used in the present application are only used to describe specific example embodiments, and are not intended to limit the present disclosure. The singular forms are intended to include the plural forms unless the context clearly dictates otherwise.

The terms such as "comprise" or "have," when used in this specification, are intended to specify the presence of stated features, integers, steps, operations, elements, components, or a combination thereof, but do not preclude the presence or addition of one or more other features, integers, steps, operations, elements, components, and/or groups thereof.

In addition, in this specification, when any one component 'transmits' data to another component, this means that the component may transmit the data to the other component directly or through at least one other component. Conversely, when one component 'directly transmits' data to another component, it means that the data is transmitted from the component to the other component without passing through still other component.

Hereinafter, the present disclosure will be described in detail focusing on example embodiments with reference to the accompanying drawings. Like reference numerals in each drawing refer to like components.

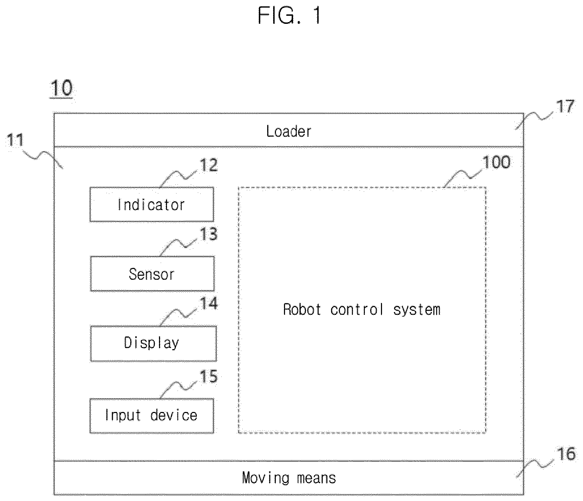

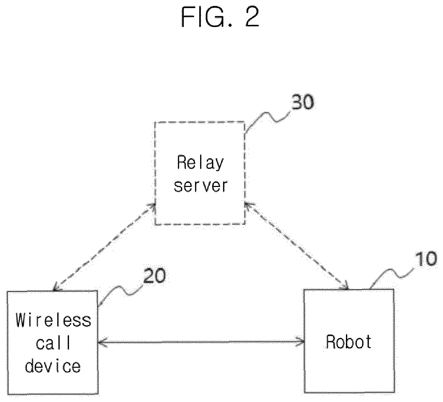

FIG. 1 is a diagram illustrating a schematic configuration of a robot on which a robot control system according to an example embodiment is mounted, and FIG. 2 is a diagram for explaining a relationship between the robot and a wireless call device according to an example embodiment.

The robot may be a serving robot for transporting food and beverage containers in a restaurant. The following description assumes that the robot is a serving robot, but the robot to which a robot control system or a robot control method according to the technical idea of the present disclosure is applied is not limited to the serving robot. The technical idea of the present disclosure as described below may be applied to various robots operated in various fields.

First, referring to FIG. 1, a robot 10 may include a robot control system 100, a housing 11, an indicator 12, a sensor 13, a display 14, an input device 15, a moving means 16, and a loader 17.

The robot control system 100 performs the robot control method according to the technical idea of the present disclosure to control the robot 10 to change an autonomous traveling path, a stop position, and the like, of the robot 10 or to move the robot 10 to a calling place in response to a command of calling the robot.

The housing 11 forms a body of the robot 11 with a material such as metal, synthetic resin, and/or glass, and may protect a structure located inside the robot 10. The robot control system 100 may be installed inside the housing 11.

The indicator 12 may output information indicating a state (mode) of the robot 10. The robot 10 may be switched to various modes such as an autonomous traveling mode in which the robot 10 autonomously travels along a preconfigured autonomous traveling path and when there is a call, autonomously moves to a stop position corresponding to the call, a movement path reconfiguration mode in which the autonomous traveling path is reconfigured, a stop position reconfiguration mode in which the stop position is reconfigured, and a standby mode in which the robot 10 is stopped at a predetermined standby position in a standby state, and the indicator 12 may output information indicating a current mode of the robot 10. For example, the indicator 12 may be an LED indicator that outputs different colors according to the modes of the robot 12. Alternatively, the indicator 12 may be a device for displaying information for identifying the mode of the robot.

The sensor 13 may sense a specific physical quantity or a specific type of energy. For example, the sensor 13 may include a position detection sensor that detects a current position of the robot 10, a motion state detection that detects a motion state (e.g., speed, acceleration, posture, etc.) of the robot 10, an external force detection sensor that detects an external force applied to the robot 10, an image sensor that receives an optical signal and converts it into an electrical signal, and a weight detection sensor that detects a weight of a load loaded in the loader 17 as well as at least some of an illuminance sensor, a proximity sensor, a pressure sensor, an optical sensor, a magnetic sensor, an acceleration sensor, and a gyro sensor.

The display 14 may be a device for visually outputting information to be output by the robot control system 100 to the outside. The display 14 may include a liquid crystal display (LCD), a light emitting diode display (LED), a plasma display (PDP), an organic light emitting diode display (OLED), and a surface conduction electron emission display (SED).

The input device 15 is a device capable of receiving a user's input, and may include a touch panel, a keyboard, and a keypad. The touch panel may include a pressure-sensitive touch panel, a resistive touch panel, or a capacitive touch panel, and may be in the form of a touch screen combined with the display device 14.

The moving means 16 is a means for imparting mobility to the robot 10, and may include a wheel driven by a motor for rotational motion and a leg-shaped walking means capable of walking.

The loader 17 is a means for loading objects such as dishes, and may include a tray.

Referring to FIG. 2, the robot 10 may receive a call command from a wireless call device 20, and the robot 10 called by the wireless call device 20 may respond to the call command to move to a predetermined stop position. If the technical idea of the present disclosure is applied to the serving robot operated in the restaurant, the wireless call device 20 may be attached to each table in the store, and serving robot receiving the call command according to operation of the wireless call device 20 may move to a stop position near the corresponding table.

In one example embodiment, the robot 10 and the wireless call device 20 are connected to each other through wireless communication to transmit and receive various information, signals, data, and the like necessary to implement the technical idea of the present disclosure. The robot and the wireless calling device 20 may communicate by a long-distance wireless communication method such as 3G, LTE, LTE-A, Wi-Fi, WiGig, or Ultra Wide Band (UWB), or by a short-range wireless communication method such as MST, Bluetooth, NFC, RFID, ZigBee, Z-Wave, or IR.

In another example embodiment, the robot 10 and the wireless call device 20 may communicate with each other via a predetermined relay server 30. In this case, the robot 10 and the relay server 30, and the wireless call device 20 and the relay server 30 may communicate using the above-described wireless communication method.

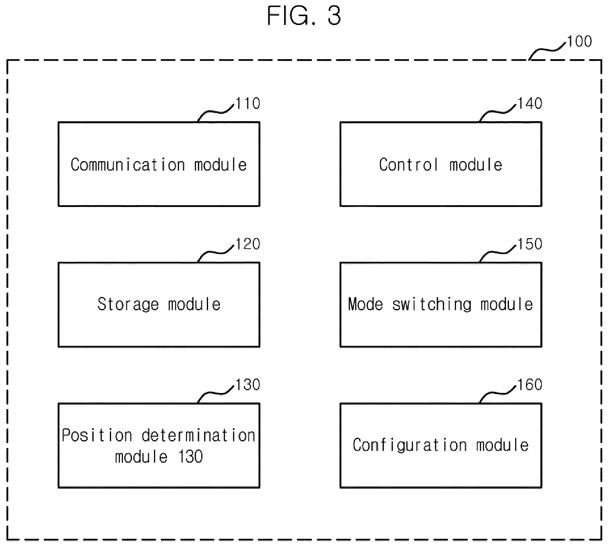

FIG. 3 is a block diagram illustrating a schematic configuration of the robot control system 100 according to an example embodiment.

Referring to FIG. 3, the robot control system 100 includes a communication module 110, a storage module 120, a position determination module 130, a control module 140, a mode switching module 150, and a configuration module 160. According to an example embodiment, some of the above-described components may not necessarily correspond to components essential for implementation of the present disclosure. Of course, according to an example embodiment, the robot control system 100 may include more components.

The robot control system 100 may include hardware resources and/or software necessary to implement the technical idea of the present disclosure, and does not necessarily mean a single physical component or a single device. In other words, the robot control system 100 may mean a logical combination of hardware and/or software provided to implement the technical idea of the present disclosure. The robot control system 100 may, if necessary, be implemented as a set of logical configurations for implementing the technical idea of the present disclosure installed in devices spaced apart from each other to perform respective functions. In addition, the robot control system 100 may mean a set of components separately implemented for each function or role for implementing the technical idea of the present disclosure.

In addition, in the present specification, a module may mean a functional and structural combination of hardware for carrying out the technical idea of the present disclosure and software for driving the hardware. For example, it may be easily inferred by an average expert in the art of the present disclosure that the module may mean a logical unit of a predetermined code and a hardware resource for executing the predetermined code, and does not necessarily mean physically connected codes or one type of hardware.

The control module 140 control functions and/or resources of the robot control system 100 and other components included in the robot 10 (e.g., the communication module 110, the storage module 120, the position determination module 130, the mode switching module 150, and the configuration module 160).

The communication module 110 may communicate with an external device and transmit/receive various signals, information, and data. The communication module 110 is a 3G module, an LTE module, an LTE-A module, a Wi-Fi module, a WiGig module, an Ultra Wide Band (UWB) module, a long-distance communication module such as a LAN card or an MST module, a Bluetooth module, an NFC module, an RFID module, a ZigBee module, a Z-Wave module, and a short-range communication module such as an IR module.

The storage module 120 may store various data and computer programs, such as data received/input from an external device and data generated by the robot control system 100. The storage module 120 may include a volatile memory and a non-volatile memory. The storage module 120 may include, for example, an SSD, a flash memory, a ROM, a RAM, an EEROM, an EPROM, an EEPROM, a hard disk, and a register. Alternatively, the storage module 120 may include a file system, a database, and an embedded database.

The storage module 120 may store in advance information on a path along which the robot 10 is to autonomously travel in the autonomous traveling mode, in other words, the autonomous traveling path, and information about a destination to which the robot 10 should move, when the robot 10 is called, in response to the call, in other words, the stop position.

The position determination module 130 may determine the position of the robot 10. The position determination module 130 may determine the position of the robot 10 based on various signals detected by the sensor 13 installed in the robot 10. For example, the position determination module 130 may determine the position of the robot 10 through GPS (Global Positioning System) information or IPS (Indoor Positioning System) information, or detect a motion of the robot 10 by a speed sensor, an acceleration sensor, a gyro sensor, or the like included in the sensor 13 to determine the position of the robot 10 based thereon. In addition to this, the position determination module 130 may determine the position of the robot 10 through various known methods.

Further, the position determination module 130 may periodically determine the position of the robot 10 for a predetermined period, thereby tracking a movement path along which the robot moves during the predetermined period.

The control module 140 may control the robot 10 to move along the preconfigured autonomous traveling path in the autonomous traveling mode.

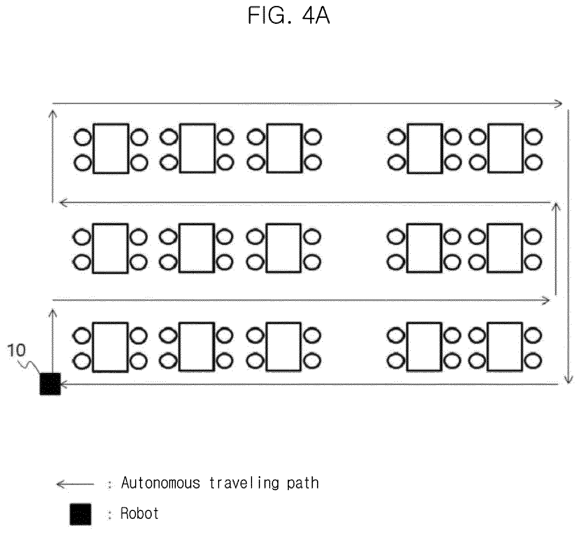

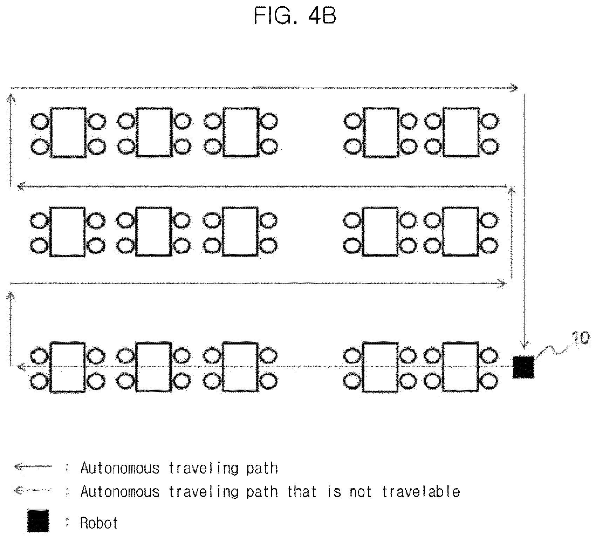

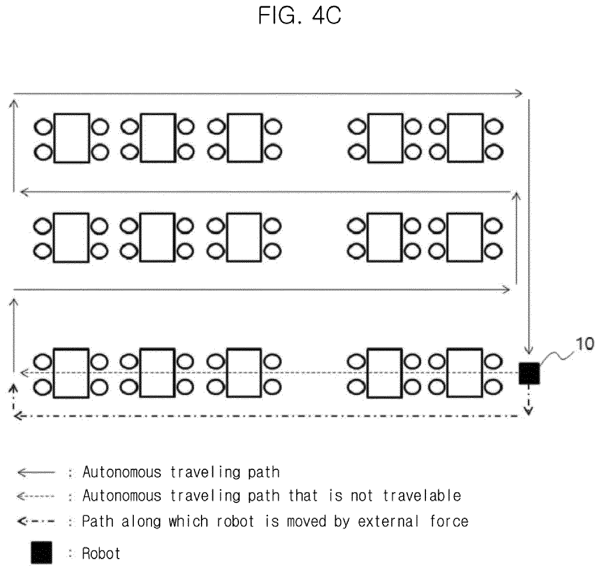

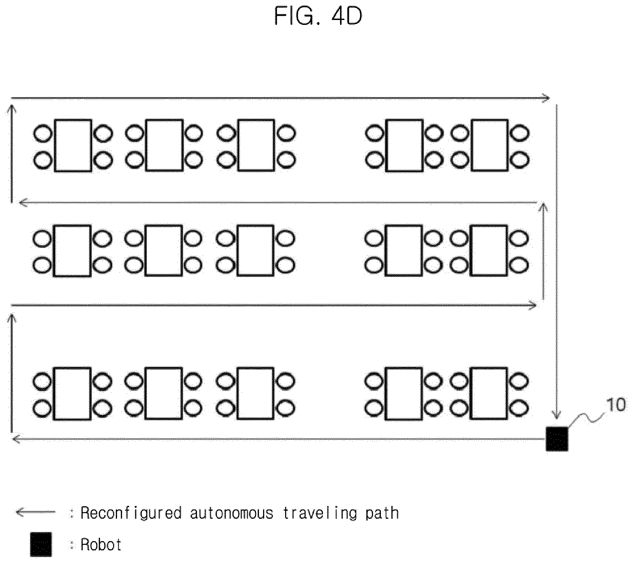

FIG. 4A is a diagram illustrating a preconfigured path along which the robot 10 autonomously travels in a store equipped with a plurality of tables/chairs (i.e., the preconfigured autonomous traveling path). Referring to FIG. 4, in the autonomous traveling mode, the control module 140 may control the robot 10 to move along the autonomous traveling path indicated by arrows.

Information on the autonomous traveling path may be predefined and stored in the storage module 120. In an example embodiment, the information on the autonomous traveling path may be configured as coordinates for a plurality of intermediate points on the autonomous traveling path.

Although FIG. 4A illustrates an example in which the autonomous traveling path circulates one path, the autonomous traveling path may be in the form of reciprocating between two points separated from each other, and may be configured in the form in which a plurality of movement paths are combined. In the case of the form in which the plurality of movement paths are combined, the control module 140 may select one of the movement paths and control the robot 10 to autonomously travel along the selected movement path.

Referring back to FIG. 3, the mode switching module 150 may switch the robot 10 from the autonomous traveling mode to the movement path reconfiguration mode when a predetermined movement path switching condition is satisfied while the robot 10 is in the autonomous traveling mode.

In one example embodiment, the mode switching module 150 may switch the robot 10 to the movement path reconfiguration mode when the robot detects an obstacle that prevents movement while moving along the autonomous traveling path in the autonomous traveling mode.

This will be described with reference to FIG. 4B as an example. When arrangement of the tables installed in the store is changed from that shown in FIG. 4A to that shown in FIG. 4B, the robot 10 autonomously traveling is blocked by the tables as shown in FIG. 4B and may no longer move along the autonomous traveling path. The mode switching module 150 may switch the robot 10 to the movement path reconfiguration mode. In other words, when the robot 10 collides with an obstacle while moving along the autonomous traveling path or is unable to move due to the obstacle in a situation where the previously configured autonomous traveling path is blocked due to a change in the location of an object installed in the store, the mode switching module 150 may detect this and switch the robot 10 to the movement path reconfiguration mode.

In addition, movement path switching conditions for switching the robot 10 from the autonomous traveling mode to the movement path reconfiguration mode may vary.

In another example embodiment, when the mode switching module 150 receives a movement path reconfiguration command through the predetermined input device 15 installed in the robot 10 while the robot is in the autonomous traveling mode, the mode switching module 150 may switch the robot to the movement path reconfiguration mode. In other words, when the user (e.g., a store employee) determines that it is necessary to change the autonomous traveling path, the user may select a movement path reconfiguration menu or the like through the input device 15 of the robot 10 to input the movement path reconfiguration command, and in response to this, the mode switching module 150 may switch to the movement path reconfiguration mode.

Alternatively, in another example embodiment, when the robot 10 deviates from the autonomous traveling path by an external force a predetermined number of times or more or for a predetermined period of time or more while being in the autonomous traveling mode, the mode switching module 150 may switch the robot 10 to the movement path reconfiguration mode. More specifically, when the user applies the external force to the robot in the autonomous traveling mode to push or pull the robot, the mode switching module 150 may detect this. For example, when detecting the external force through the sensor 13 provided in the robot 10 or that the position of the robot 10 is changed in a situation where the robot 10 is not controlled by the control module 140 or deviates from the preconfigured autonomous traveling path, the mode conversion module 150 may determines that the robot 10 deviates from the autonomous traveling path due to the external force. When it is determined that the robot 10 deviates from the autonomous traveling path by the external force the predetermined number of times or more or for the predetermined period of time or more, the mode switching module 150 may switch the robot 10 to the movement path reconfiguration mode.

Alternatively, when the robot deviates from the autonomous traveling path by the external force a predetermined number of times or more or for a predetermined period of time or more after the robot detects an obstacle that prevents movement while moving along the autonomous traveling path in the autonomous traveling mode, the mode switching module 150 may switch the robot 10 to the movement path reconfiguration mode.

Alternatively, when detecting the situation where the obstacle that prevents movement is detected while the robot moves along the autonomous traveling path in the autonomous traveling mode and/or the robot deviates from the autonomous traveling path by the external force the predetermined number of times or more or for the predetermined period of time or more, the mode switching module 150 may output alarm information informing the user of the situation and may receive the user's movement path reconfiguration command to switch the robot 10 to the movement path reconfiguration mode.

Further, referring back to FIG. 3, when the robot 10 is moved by the external force, the configuration module 160 may track the movement path while the robot 10 is moved by the external force in the movement path reconfiguration mode. In addition, the configuration module 160 may reconfigure the autonomous traveling path based on the tracked movement path.

An example in which the autonomous traveling path is reconfigured will be described with reference to FIGS. 4C and 4D.

Referring to FIG. 4C, the user may move the robot 10 by thee external force by pushing or pulling the robot 10 switched to the movement path reconfiguration mode. As shown in FIG. 4C, the user may move the robot 10 along a path shown by the dashed-dotted line. Then, the configuration module 150 may track the movement path while the robot 10 is moved by the external force.

Thereafter, the configuration module 160 may reconfigure the autonomous traveling path based on the tracked movement path. The reconfigured movement path is shown in FIG. 4D. When the movement path caused by the external force such as the dashed-dotted line in FIG. 4C is tracked, the configuration module 160 may reflect this to the previously configured autonomous traveling path and reconfigure the autonomous traveling path as shown in FIG. 4D.

On the other hand, the mode switching module 150 may switch the robot 10 to the autonomous traveling mode after the autonomous traveling path is reconfigured by the configuration module 160, and the control module 140 may control the robot 10 to autonomously travel along the reconfigured autonomous traveling path.

As described above, the robot control system 100 according to an example embodiment may change the autonomous traveling path of the robot 10. **In** addition, the robot control system 100 according to another example embodiment may change the preconfigured stop position of the robot 10, which will be described below.

The robot 10 may be called by the wireless call device 20 in the autonomous traveling mode, and the control module 120 may control the robot 10 to move to the preconfigured stop position when the robot 10 is called.

The mode switching module 150 may switch the robot 10 from the autonomous traveling mode to the stop position reconfiguration mode when a predetermined stop position switching condition is satisfied while the robot 10 is in the autonomous traveling mode.

In one example embodiment, the mode switching module 150 may switch the robot to the stop position reconfiguration mode when a stop position reconfiguration command is input through the predetermined input device 15 installed in the robot while the robot 10 is in the autonomous traveling mode. In other words, when the user (e.g., the store employee) determines that it is necessary to change the stop position, the user selects a device position reconfiguration menu or the like through the input device 15 of the robot 10 to input the stop position reconfiguration command, and in response to this, the mode switching module 150 may switch the robot 10 to the stop position reconfiguration mode.

In another example embodiment, when the robot 10 deviates from the stop position by an external force a predetermined number of times or more or for a predetermined period of time or more after the robot 10 moves to the stop position, the mode switching module 150 may switch the robot 10 to the stop position reconfiguration mode. More specifically, when the user applies the external force to the robot moved to the stop position by the call to push or pull it, the mode switching module 150 may detect this. For example, when detecting the external force through the sensor 13 provided in the robot 10 or that the position of the robot 10 is changed in a situation where the robot 10 is not controlled by the control module 140 or deviates from the stop position, the mode conversion module 150 may determines that the robot 10 deviates from the stop position due to the external force. When it is determined that the robot 10 deviates from the stop position by the external force the predetermined number of times or more or for the predetermined period of time or more, the mode switching module 150 may switch the robot 10 to the stop position reconfiguration mode.

In another example embodiment, when the robot detects an obstacle that prevents movement while moving to the stop position in the autonomous traveling mode, the robot may be switched to the stop position reconfiguration mode.

In another example embodiment, when the robot 10 detects an obstacle that prevents movement while moving to the stop position by the call of the wireless call device 20 in the autonomous traveling mode, the robot may be moved to the stop position reconfiguration mode. In other words, when the robot 10 collides with the obstacle while moving along a path to the stop position or is unable to move due to the obstacle in a situation where the path to the previously configured stop position is blocked due to a change in the location of an object installed in the store, the mode switching module 150 may detect this and switch the robot 10 to the stop position reconfiguration mode.

Further, when the robot 10 is moved by the external force in the stop position reconfiguration mode, the configuration module 160 may determine a movement position to which the robot 10 is moved by the external force, and reconfigure the stop position to the movement position.

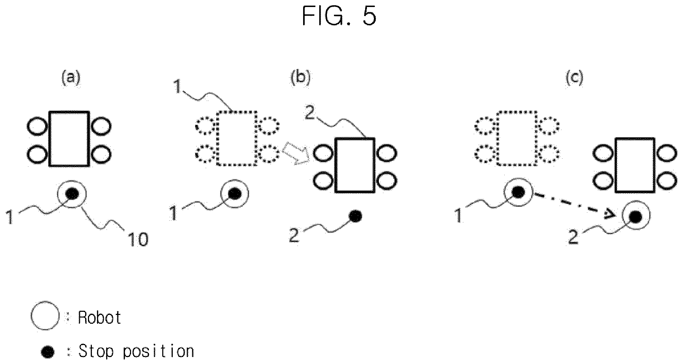

An example in which the stop position of the robot 10 is reconfigured will be described with reference to FIG. 5.

FIG. 5(a) is a diagram illustrating the robot 10 that moves to a preconfigured previous stop position. Before the stop position is reconfigured, the robot 10 may move to a stop position 1 preconfigured by calling of the wireless call device 20.

FIG. 5(b) is a diagram illustrating that the stop position should be changed as tables/chairs arrangement near the stop position is changed. In the case that the tables/chairs has been previously placed in position (1) and the arrangement is changed to position (2), the robot 10 should arrive at the stop position (2) when the robot 10 is called, but the robot 10 moves to the preconfigured stop position (1).

At this time, when the above-described stop position switching condition is satisfied, the robot 10 is switched to the stop position switching mode, the user changes the position of the robot from the position (1) to the position (2) by an external force as shown in FIG. 5(c), and the configuration module 160 may reconfigure the stop position from the position (1) to the position (2).

After the stop position is reconfigured by the configuration module 160, the mode switching module 150 may switch the robot 10 to the autonomous traveling mode. In the case that there is a call from the wireless call device 20 after the stop position is reconfigured, the control module 150 may move the robot 10 to the position (2) instead of the position (1).

In addition, the control module 140 may control the robot to move along the autonomous traveling path again when a predetermined stop period of time elapses after the robot is called and moves to the stop position. In the case that the robot 10 is required to stay a little longer at the stop position, the control module 140 may extend the stop period of time and control the robot 10 to move along the autonomous traveling path again after the extended period of time elapses. In particular, when the robot 10 is the serving robot, it is necessary to load the serving robot with dishes to be removed from the table. Accordingly, the control module 140 may extend the stop period of time when it is detected that the robot 10 is loaded with an object.

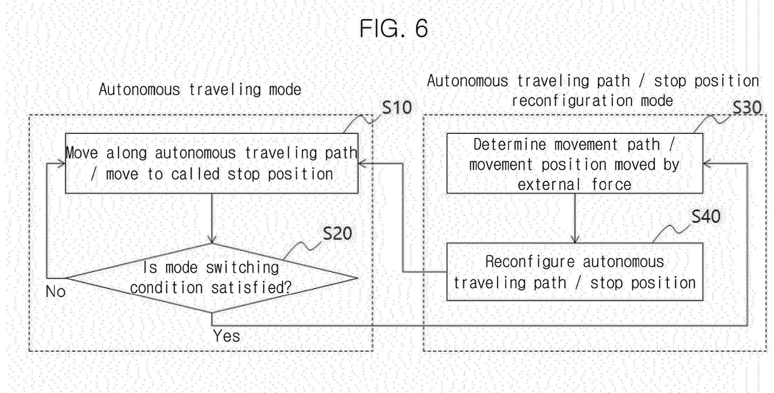

FIG. 6 is a flowchart illustrating a robot control method according to an example embodiment.

Referring to FIG. 6, the robot 10 may be in the autonomous traveling mode or the autonomous traveling path (or the stop position reconfiguration mode).

When the robot 10 is in the autonomous traveling mode, the robot control system 100 may control the robot 10 to move along the preconfigured autonomous traveling path or move to the preconfigured stop position by calling of the wireless call device 20 (S10).

Further, the robot control system 100 may determine whether a predetermined autonomous traveling path reconfiguration mode switching condition (or a stop position reconfiguration mode switching condition) is satisfied (S20). When it is determined that the condition is satisfied, the robot control system 100 may switch to the movement path reconfiguration mode (or the stop position reconfiguration mode).

In the movement path reconfiguration mode (or the stop position reconfiguration mode), the robot control system 100 may determine the movement path of the robot moved by an external force (or the movement position of the robot moved by the external force) (S30), and may reconfigure the autonomous traveling path (or the stop position) (S40). When the reconfiguration is completed, the robot control system 100 may switch the robot 10 back to the autonomous traveling mode.

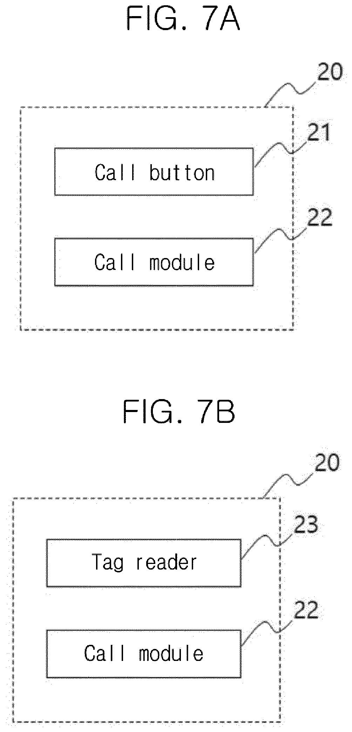

Each of FIGS. 7A and 7B is a diagram illustrating an example of a wireless call device according to an example embodiment.

First, referring to FIG. 7A, in one example embodiment, the wireless call device 20 may include a call button 21 and a call module 22.

The call button 21 is a button that receives the user's input, and may be a physical button or a virtual button implemented as a touch screen provided in the wireless call device 20.

When the call button 21 is pressed, the call module 22 may transmit a call command including identification information corresponding to the wireless call device 20 to the robot 10, and control the robot 10 to move to the stop position corresponding to the identification information.

The store may be equipped with a plurality of the wireless call devices 20. For example, the wireless call device may be attached to each table arranged in the store. In this case, since the robot 10 should move to the stop position near the table where the wireless call device that calls it is installed, the stop position corresponding to each wireless call device may be preconfigured. In particular, the identification information of each wireless call device and the stop position corresponding to the wireless call device may be mapped. Further, when there is a call from the wireless call device 20, the robot 10 may move to the stop position corresponding to the wireless call device 20 that calls it among several preconfigured stop positions.

The call button 21 may be pressed short or long, and a pattern such as a Morse code may be formed by the length of each pressing. The call module 22 may recognize a Morse code-like pattern formed by a button press or a time interval between presses, and transmit the call command to the robot 10 only when the pattern matches a predefined pattern. In other words, in one example embodiment, when the call button 21 is pressed long or short multiple times and a predetermined pattern is formed by the length of each press or the length of the time interval between presses, the call module 22 may transmit the call command to the robot 10. In this way, it is possible to prevent a customer seated at the table in the store from arbitrarily calling the robot 10, and allow only the employee who knows the predetermined pattern to call the robot 10.

Referring to FIG. 7B, the wireless call device 20 may include a tag reader 23 and the call module 22.

The tag reader 23 may recognize a tag located outside of the wireless call device 20. The tag may be attached to a fixed location such as the table in the store, and the tag reader 23 may recognize identification information corresponding to the tag. The tag may include an NFC tag, a barcode tag, and a QR code tag.

When the tag is recognized by the tag reader 23, the call module 22 may transmit a call command including the identification information corresponding to the recognized tag to the robot 10 to control the robot 10 to move to the stop position corresponding to the identification information.

The example embodiment shown in FIG. 7B may be used in a form in which the employee recognizes the tag attached to the table while carrying the wireless call device 20.

According to an example embodiment, the robot control system 100 may include a processor and a memory for storing a program executed by the processor. The processor may include a CPU, GPU, MCU, APU, microprocessor, single-core CPU, or multi-core CPU. The memory may include high-speed random access memory and may include non-volatile memory such as one or more magnetic disk storage devices, flash memory devices, or other non-volatile solid-state memory devices. Access to the memory by the processor and other components may be controlled by a memory controller. Here, when the program is executed by the processor, the robot control system 100 according to the present example embodiment may perform the above-described method.

In addition, the method according to an example embodiment may be implemented in the form of computer-readable program instructions and stored in a non-transitory computer-readable recording medium, and a control program and a target program according to an example embodiment may also be stored in a non-transitory computer-readable recording medium. The non-transitory computer-readable recording medium includes all types of recording devices in which data readable by a computer system is stored.

The program instructions recorded on the recording medium may be specially designed and configured for the present disclosure, or may be known and available to those skilled in the software field.

Examples of the non-transitory computer-readable recording medium include hardware devices specially configured to store and execute program instructions, such as magnetic media such as hard disks, floppy disks and magnetic tapes, optical recording media such as CD-ROMs and DVDs, magneto-optical media such as floptical disks, ROM, RAM, and flash memory. In addition, the non-transitory computer-readable recording medium is distributed in a computer system connected through a network, so that computer-readable codes may be stored and executed in a distributed manner.

Examples of the program instruction include not only machine codes such as generated by a compiler, but also high-level language codes that can be executed by a device for electronically processing information using an interpreter or the like, for example, a computer.

The hardware devices described above may be configured to operate as one or more software modules to perform operations of the present disclosure, and vice versa.

The foregoing description of the present disclosure is for illustration, and those skilled in the art to which the present disclosure pertains can understand that modifications into other specific forms may be easily made without changing essential features of the present disclosure. Therefore, it should be understood that the example embodiments described above are illustrative in all respects and not restrictive. For example, each component described as a single type may be implemented in a distributed manner, and components described as distributed may be implemented in a combined form.

### Industrial Applicability

The present disclosure may be applied to a robot control system, a robot control method, and a wireless call device.

## Claims

1. A robot control system (100) installed in a robot (10) to control the robot (10), comprising:
a control module (140) configured to control the robot (10) to move along a preconfigured autonomous traveling path in an autonomous traveling mode;
a mode switching module (150) configured to switch the robot (10) from the autonomous traveling mode to a movement path reconfiguration mode when a predetermined switching condition is satisfied while the robot (10) is in the autonomous traveling mode; and **characterised by**
a configuration module (160) configured to, when the robot (10) is moved by an external force in the movement path reconfiguration mode, track a movement path while the robot (10) is moved by the external force, and to reconfigure the autonomous traveling path based on the tracked movement path;
wherein the control module (140) is further configured to control the robot (10) to autonomously travel along the reconfigured autonomous traveling path.

2. The robot control system (100) of claim 1,
wherein the mode switching module (150) is configured to switch the robot (10) to the movement path reconfiguration mode when a movement path reconfiguration command is input through a predetermined input device installed in the robot (10) while the robot (10) is in the autonomous traveling mode; and/or
wherein the mode switching module (150) is configured to switch the robot (10) to the movement path reconfiguration mode when the robot (10) deviates from the autonomous traveling path by an external force a predetermined number of times or more or for a predetermined period of time or more while the robot (10) is in the autonomous traveling mode; and/or
wherein the mode switching module (150) is configured to switch the robot (10) to the movement path reconfiguration mode when the robot (10) detects an obstacle that prevents movement while moving along the autonomous traveling path in the autonomous traveling mode.

3. The robot control system (100) of claim 1,
wherein the control module (140) is configured to control the robot (10) to move to a preconfigured stop position when the robot is called by a wireless call device (20) in the autonomous traveling mode;
wherein preferably the control module (140) is configured to control the robot (10) to move along the autonomous traveling path when a predetermined stop period of time elapses after the robot (10) moves to the stop position, and
extend the stop period of time when it is detected that the robot (10) is loaded with an object.

4. A robot control system (100) installed in a robot (10) to control the robot (10), comprising:
a control module (140) configured to control the robot (10) to move to a preconfigured stop position when the robot (10) is called by a wireless call device (20) in an autonomous traveling mode;
a mode switching module (150) configured to switch the robot (10) from the autonomous traveling mode to a stop position reconfiguration mode when a predetermined switching condition is satisfied while the robot (10) is in the autonomous traveling mode; and **characterised by**
a configuration module (160) configured to, when the robot (10) is moved by an external force in the stop position reconfiguration mode, determine a movement position to which the robot (10) is moved by an external force, and reconfigure the stop position to the movement position;
the control module (140) is further configured to control the robot (10) to move to the reconfigured stop position instead of the preconfigured stop position.

5. The robot control system of claim 4,
wherein the mode switching module (150) is configured to, when a stop position reconfiguration command is input through a predetermined input device installed in the robot (10) while the robot (10) is in the autonomous traveling mode, switch the robot (10) to the stop position reconfiguration mode; and/or
wherein the mode switching module (150) is configured to switch the robot (10) to the stop position reconfiguration mode when the robot (10) deviates from the stop position by an external force a predetermined number of times or more or for a predetermined period of time or more after moving to the stop position; and/or
wherein the mode switching module (150) is configured to switch the robot (10) to the stop position reconfiguration mode when the robot (10) detects an obstacle that prevents movement while moving to the stop position in the autonomous traveling mode.

6. The robot control system (100) of claim 1 or 4, wherein the robot (10) is a serving robot for transporting food and beverage containers in a restaurant.

7. A wireless call device (20) for calling a robot (10) equipped with the robot control system (100) according to claim 3 or 4, comprising:
a call button (21); and
a call module (22) configured to transmit a call command including identification information corresponding to the wireless call device to the robot (10) when the call button is pressed to control the robot (10) to move to a stop position corresponding to the identification information.

8. The wireless call device (20) of claim 7, wherein the call module (22) is configured to transmit the call command to the robot (10) when the call button is pressed a plurality of times long or short and a predetermined pattern is formed by a length of each press or a length of a time interval between presses.

9. A wireless call device (20) for calling a robot (10) equipped with the robot control system (100) according to claim 3 or 4, comprising:
a tag reader (23) configured to recognize a tag located outside the wireless call device (20); and
a call module (22) configured to, when a tag is recognized by the tag reader (23), transmit a call command including identification information corresponding to the recognized tag to the robot (10) to control the robot (10) to move to a stop position corresponding to the identification information.

10. A robot control method performed by a robot control system (100) installed in a robot (10) which controls the robot (10), comprising:
controlling the robot (10) to move along a preconfigured autonomous traveling path in an autonomous traveling mode;
switching the robot (10) from the autonomous traveling mode to a movement path reconfiguration mode when a predetermined switching condition is satisfied while the robot (10) is in the autonomous traveling mode; **characterised in that**
when the robot (10) is moved by an external force in the movement path reconfiguration mode, tracking a movement path while the robot (10) is moved by the external force, and reconfiguring the autonomous traveling path based on the tracked movement path;
controlling the robot (10) to autonomously travel along the reconfigured autonomous traveling path.

11. The robot control method of claim 10,
wherein the switching of the robot (10) from the autonomous traveling mode to the movement path reconfiguration mode when the predetermined switching condition is satisfied while the robot (10) is in the autonomous traveling mode comprises switching the robot (10) to the movement path reconfiguration mode when a movement path reconfiguration command is input through a predetermined input device installed in the robot (10) while the robot (10) is in the autonomous traveling mode; and/or
wherein the switching of the robot (10) from the autonomous traveling mode to the movement path reconfiguration mode when the predetermined switching condition is satisfied while the robot (10) is in the autonomous traveling mode comprises switching the robot (10) to the movement path reconfiguration mode when the robot (10) detects an obstacle that prevents movement while moving along the autonomous traveling path in the autonomous traveling mode.

12. The robot control method of claim 10, wherein the switching of the robot (10) from the autonomous traveling mode to the movement path reconfiguration mode when the predetermined switching condition is satisfied while the robot (10) is in the autonomous traveling mode comprises switching the robot (10) to the movement path reconfiguration mode when the robot (10) deviates from the autonomous traveling path by an external force a predetermined number of times or more or for a predetermined period of time or more while the robot (10) is in the autonomous traveling mode.

13. A robot control method performed by a robot control system (100) installed in a robot (10) which controls the robot (10), comprising:
controlling the robot (10) to move to a preconfigured stop position when the robot (10) is called in an autonomous traveling mode;
switching the robot (10) from the autonomous traveling mode to a stop position reconfiguration mode when a predetermined switching condition is satisfied while the robot (10) is in the autonomous traveling mode; **characterised in that**
when the robot (10) is moved by an external force in the stop position reconfiguration mode, determining a movement position to which the robot (10) is moved by an external force and reconfiguring the stop position to the movement position;
controlling the robot (10) to move to the reconfigured stop position instead of the preconfigured stop position.

14. A computer program installed in a data processing apparatus and stored in a non-transitory recording medium to perform the method according to any one of claims 10 to 13.

15. A non-transitory computer-readable recording medium in which a computer program for performing the method according to any one of claims 10 to 13 is recorded.

## Patentansprüche

1. Robotersteuerungssystem (100), das in einem Roboter (10) installiert ist, um den Roboter (10) zu steuern, umfassend:
ein Steuermodul (140), das so ausgestaltet ist, dass es den Roboter (10) so steuert, dass er sich entlang eines vorkonfigurierten autonomen Fahrwegs in einem autonomen Fahrmodus bewegt;
ein Modus-Umschaltmodul (150), das so ausgestaltet ist, dass es den Roboter (10) von dem autonomen Fahrmodus in einen Fahrweg-Rekonfigurationsmodus umschaltet, wenn eine vorbestimmte Umschaltbedingung erfüllt ist, während sich der Roboter (10) in dem autonomen Fahrmodus befindet; und **gekennzeichnet durch**
ein Konfigurationsmodul (160), das so ausgestaltet ist, dass es, wenn der Roboter (10) durch eine äußere Kraft in dem Fahrweg-Rekonfigurationsmodus bewegt wird, einen Fahrweg verfolgt, während der Roboter (10) durch die äußere Kraft bewegt wird, und den autonomen Fahrweg basierend auf dem verfolgten Fahrweg neu konfiguriert;
wobei das Steuermodul (140) ferner so ausgestaltet ist, dass es den Roboter (10) so steuert, dass er sich autonom entlang des neu konfigurierten autonomen Fahrwegs bewegt.

2. Robotersteuerungssystem (100) nach Anspruch 1,
wobei das Modus-Umschaltmodul (150) so ausgestaltet ist, dass es den Roboter (10) in den Fahrweg-Rekonfigurationsmodus umschaltet, wenn ein Fahrweg-Rekonfigurationsbefehl über eine in dem Roboter (10) installierte vorbestimmte Eingabevorrichtung eingegeben wird, während sich der Roboter (10) in dem autonomen Fahrmodus befindet; und/oder
wobei das Modus-Umschaltmodul (150) so ausgestaltet ist, dass es den Roboter (10) in den Fahrweg-Rekonfigurationsmodus umschaltet, wenn der Roboter (10) durch eine äußere Kraft eine vorbestimmte Anzahl von Malen oder mehr oder für eine vorbestimmte Zeitspanne oder mehr von dem autonomen Fahrweg abweicht, während sich der Roboter (10) in dem autonomen Fahrmodus befindet; und/oder
wobei das Modus-Umschaltmodul (150) so ausgestaltet ist, dass es den Roboter (10) in den Fahrweg-Rekonfigurationsmodus umschaltet, wenn der Roboter (10) ein Hindernis erkennt, das eine Bewegung verhindert, während er sich entlang des autonomen Fahrwegs im autonomen Fahrmodus bewegt.

3. Robotersteuerungssystem (100) nach Anspruch 1,
wobei das Steuermodul (140) so ausgestaltet ist, dass es den Roboter (10) so steuert, dass er sich in eine vorkonfigurierte Halteposition bewegt, wenn der Roboter von einer drahtlosen Rufvorrichtung (20) im autonomen Fahrmodus gerufen wird;
wobei vorzugsweise das Steuermodul (140) so ausgestaltet ist, dass es den Roboter (10) so steuert, dass er sich entlang des autonomen Fahrwegs bewegt, wenn eine vorbestimmte Haltezeitspanne verstreicht, nachdem sich der Roboter (10) zur Halteposition bewegt hat, und
die Haltezeit zu verlängert, wenn festgestellt wird, dass der Roboter (10) mit einem Gegenstand beladen ist.

4. Robotersteuerungssystem (100), das in einem Roboter (10) installiert ist, um den Roboter (10) zu steuern, umfassend:
ein Steuermodul (140), das so ausgestaltet ist, dass es den Roboter (10) so steuert, dass er sich in eine vorkonfigurierte Halteposition bewegt, wenn der Roboter (10) von einer drahtlosen Rufvorrichtung (20) in einem autonomen Fahrmodus gerufen wird;
ein Modus-Umschaltmodul (150), das so ausgestaltet ist, dass es den Roboter (10) von autonomen Fahrmodus in einen Halteposition-Rekonfigurationsmodus umschaltet, wenn eine vorbestimmte Umschaltbedingung erfüllt ist, während sich der Roboter (10) in dem autonomen Fahrmodus befindet; und **gekennzeichnet durch**
ein Konfigurationsmodul (160), das so ausgestaltet ist, dass es, wenn der Roboter (10) durch eine äußere Kraft in dem Halteposition-Rekonfigurationsmodus bewegt wird, eine Bewegungsposition bestimmt, in die der Roboter (10) durch eine äußere Kraft bewegt wird, und die Halteposition in die Bewegungsposition neu konfiguriert;
das Steuermodul (140) ferner so ausgestaltet ist, dass es den Roboter (10) so steuert, dass er sich anstelle der vorkonfigurierten Halteposition in die neu konfigurierte Halteposition bewegt.

5. Robotersteuerungssystem nach Anspruch 4,
wobei das Modus-Umschaltmodul (150) so ausgestaltet ist, dass es, wenn ein Befehl zur Rekonfiguration der Halteposition über eine vorbestimmte, in dem Roboter (10) installierte Eingabevorrichtung eingegeben wird, während sich der Roboter (10) in dem autonomen Fahrmodus befindet, den Roboter (10) in den Modus zur Rekonfiguration der Halteposition schaltet; und/oder
wobei das Modus-Umschaltmodul (150) so ausgestaltet ist, dass es den Roboter (10) in den Halteposition-Rekonfigurationsmodus schaltet, wenn der Roboter (10) durch eine äußere Kraft eine vorbestimmte Anzahl von Malen oder mehr oder für eine vorbestimmte Zeitspanne oder mehr nach dem Bewegen in die Halteposition von der Halteposition abweicht; und/oder
wobei das Modus-Umschaltmodul (150) so ausgestaltet ist, dass es den Roboter (10) in den Halteposition-Rekonfigurationsmodus schaltet, wenn der Roboter (10) ein Hindernis erkennt, das eine Bewegung zur Halteposition verhindert, während er sich in dem autonomen Fahrmodus bewegt.

6. Robotersteuerungssystem (100) nach Anspruch 1 oder 4, wobei der Roboter (10) ein Servierroboter zum Transportieren von Lebensmittel- und Getränkebehältern in einem Restaurant ist.

7. Drahtlose Rufvorrichtung (20) zum Rufen eines Roboters (10), der mit dem Robotersteuerungssystem (100) nach Anspruch 3 oder 4 ausgestattet ist, umfassend:
eine Ruftaste (21); und
ein Rufmodul (22), das so ausgestaltet ist, dass es einen Rufbefehl mit Identifikationsinformationen, die der drahtlosen Rufvorrichtung entsprechen, an den Roboter (10) sendet, wenn die Ruftaste gedrückt wird, um den Roboter (10) so zu steuern, dass er sich in eine Halteposition bewegt, die den Identifikationsinformationen entspricht.

8. Drahtlose Rufvorrichtung (20) nach Anspruch 7, wobei das Rufmodul (22) so ausgestaltet ist, dass es den Rufbefehl an den Roboter (10) sendet, wenn die Ruftaste mehrere Male lang oder kurz gedrückt wird und ein vorbestimmtes Muster durch eine Länge jedes Drucks oder eine Länge eines Zeitintervalls zwischen den Drücken gebildet wird.

9. Drahtlose Rufvorrichtung (20) zum Rufen eines Roboters (10), der mit dem Robotersteuerungssystem (100) nach Anspruch 3 oder 4 ausgestattet ist, umfassend:
ein Etikettlesegerät (23), das so ausgestaltet ist, dass es ein außerhalb der drahtlosen Rufvorrichtung (20) befindliches Etikett erkennt; und
ein Rufmodul (22), das so ausgestaltet ist, dass es, wenn ein Etikett von dem Etikettlesegerät (23) erkannt wird, einen Rufbefehl, der Identifikationsinformationen enthält, die dem erkannten Etikett entsprechen, an den Roboter (10) sendet, um den Roboter (10) so zu steuern, dass er sich in eine Halteposition bewegt, die den Identifikationsinformationen entspricht.

10. Robotersteuerungsverfahren, das von einem in einem Roboter (10) installierten Robotersteuerungssystem (100) durchgeführt wird, das den Roboter (10) steuert, umfassend:
Steuerung des Roboters (10) zur Bewegung entlang eines vorkonfigurierten autonomen Fahrwegs in einem autonomen Fahrmodus;
Umschalten des Roboters (10) von dem autonomen Fahrmodus in einen Fahrweg-Rekonfigurationsmodus, wenn eine vorbestimmte Umschaltbedingung erfüllt ist, während sich der Roboter (10) in dem autonomen Fahrmodus befindet; **dadurch gekennzeichnet, dass**
wenn der Roboter (10) durch eine äußere Kraft in dem Fahrweg-Rekonfigurationsmodus bewegt wird, Verfolgen eines Fahrweges, während der Roboter (10) durch die äußere Kraft bewegt wird, und Rekonfigurieren des autonomen Fahrweges basierend auf dem verfolgten Fahrweg;
Steuerung des Roboters (10) zum autonomen Fahren entlang des neu konfigurierten autonomen Fahrwegs.

11. Robotersteuerungsverfahren nach Anspruch 10,
wobei das Umschalten des Roboters (10) von dem autonomen Fahrmodus in den Fahrweg-Rekonfigurationsmodus, wenn die vorbestimmte Umschaltbedingung erfüllt ist, während sich der Roboter (10) in der autonomen Fahrmodus befindet,
das Umschalten des Roboters (10) in den Fahrweg-Rekonfigurationsmodus umfasst, wenn ein Fahrweg-Rekonfigurationsbefehl über eine in dem Roboter (10) installierte vorbestimmte Eingabevorrichtung eingegeben wird, während sich der Roboter (10) in dem autonomen Fahrmodus befindet; und/oder
wobei das Umschalten des Roboters (10) von dem autonomen Fahrmodus in den Fahrweg-Rekonfigurationsmodus, wenn die vorbestimmte Umschaltbedingung erfüllt ist, während sich der Roboter (10) in der autonomen Fahrmodus befindet, das Umschalten des Roboters (10) in die Fahrweg-Rekonfigurationsmodus umfasst, wenn der Roboter (10) ein Hindernis erfasst, das eine Bewegung verhindert, während er sich in der autonomen Fahrmodus entlang der autonomen Fahrbahn bewegt.

12. Robotersteuerungsverfahren nach Anspruch 10, wobei das Umschalten des Roboters (10) vom autonomen Fahrmodus in den Fahrweg-Rekonfigurationsmodus, wenn die vorbestimmte Umschaltbedingung erfüllt ist, während sich der Roboter (10) im autonomen Fahrmodus befindet, das Umschalten des Roboters (10) in den Fahrweg-Rekonfigurationsmodus umfasst, wenn der Roboter (10) durch eine äußere Kraft eine vorbestimmte Anzahl von Malen oder mehr oder für eine vorbestimmte Zeitdauer oder mehr von der autonomen Fahrbahn abweicht, während sich der Roboter (10) im autonomen Fahrmodus befindet.

13. Robotersteuerungsverfahren, das von einem in einem Roboter (10) installierten Robotersteuerungssystem (100) durchgeführt wird, das den Roboter (10) steuert, umfassend:
Steuerung des Roboters (10), um zu einer vorkonfigurierten Halteposition zu fahren, wenn der Roboter (10) in einem autonomen Fahrmodus aufgerufen wird;
Umschalten des Roboters (10) von dem autonomen Fahrmodus in einen Halteposition-Rekonfigurationsmodus, wenn eine vorbestimmte Umschaltbedingung erfüllt ist, während sich der Roboter (10) in dem autonomen Fahrmodus befindet; **dadurch gekennzeichnet, dass**
wenn der Roboter (10) durch eine äußere Kraft im Halteposition-Rekonfigurationsmodus bewegt wird, Bestimmen einer Bewegungsposition, in die der Roboter (10) durch eine äußere Kraft bewegt wird, und Rekonfigurieren der Halteposition in die Bewegungsposition;
Steuerung des Roboters (10) so, dass er die neu konfigurierte Halteposition anstelle der vorkonfigurierten Halteposition ansteuert.

14. Computerprogramm, das in einem Datenverarbeitungsgerät installiert und in einem nicht-flüchtigen Aufzeichnungsmedium gespeichert ist, um das Verfahren nach einem der Ansprüche 10 bis 13 durchzuführen.

15. Nicht-flüchtiges, computerlesbares Aufzeichnungsmedium, auf dem ein Computerprogramm zur Durchführung des Verfahrens nach einem der Ansprüche 10 bis 13 aufgezeichnet ist.

## Revendications

1. Un système de commande de robot (100) installé dans un robot (10) pour commander le robot (10), comprenant :
un module de commande (140) configuré pour commander le robot (10) afin qu'il se déplace le long d'une trajectoire de déplacement autonome préconfigurée dans un mode de déplacement autonome ;
un module de commutation de mode (150) configuré pour faire passer le robot (10) du mode de déplacement autonome à un mode de reconfiguration du trajectoire de déplacement lorsqu'une condition de commutation prédéterminée est remplie alors que le robot (10) est en mode de déplacement autonome ; et **caractérisé par**
un module de configuration (160) configuré pour, lorsque le robot (10) est déplacé par une force extérieure dans le mode de reconfiguration de la trajectoire de déplacement, suivre une trajectoire de déplacement pendant que le robot (10) est déplacé par la force extérieure, et pour reconfigurer la trajectoire de déplacement autonome sur la base de la trajectoire de déplacement suivie ;
le module de commande (140) est en outre configuré pour commander le robot (10) afin qu'il se déplace de manière autonome le long du trajectoire de déplacement autonome reconfigurée.

2. Le système de commande de robot (100) de la revendication 1,
dans lequel le module de commutation de mode (150) est configuré pour faire passer le robot (10) en mode de reconfiguration du trajectoire de déplacement lorsqu'une commande de reconfiguration du trajectoire de déplacement est entrée par l'intermédiaire d'un dispositif d'entrée prédéterminé installé dans le robot (10) alors que le robot (10) est en mode de déplacement autonome ; et/ou
dans lequel le module de commutation de mode (150) est configuré pour faire passer le robot (10) en mode de reconfiguration de la trajectoire de déplacement lorsque le robot (10) s'écarte de la trajectoire de déplacement autonome sous l'effet d'une force extérieure un nombre prédéterminé de fois ou plus ou pendant une période prédéterminée ou plus alors que le robot (10) est en mode de déplacement autonome ; et/ou
dans lequel le module de commutation de mode (150) est configuré pour faire passer le robot (10) en mode de reconfiguration de la trajectoire de déplacement lorsque le robot (10) détecte un obstacle qui empêche le déplacement tout en se déplaçant le long de la trajectoire de déplacement autonome en mode de déplacement autonome.

3. Le système de commande de robot (100) de la revendication 1,
dans lequel le module de commande (140) est configuré pour commander le robot (10) afin qu'il se déplace jusqu'à une position d'arrêt préconfigurée lorsque le robot est appelé par un dispositif d'appel sans fil (20) en mode de déplacement autonome ;
dans lequel, de préférence, le module de commande (140) est configuré pour commander le robot (10) afin qu'il se déplace le long de la voie de déplacement autonome lorsqu'une période d'arrêt prédéterminée s'écoule après que le robot (10) s'est déplacé jusqu'à la position d'arrêt, et
prolonger la période d'arrêt lorsqu'il est détecté que le robot (10) est chargé d'un objet.

4. Le système de commande de robot (100) installé dans un robot (10) pour commander le robot (10), comprenant :
un module de commande (140) configuré pour commander le robot (10) afin qu'il se déplace jusqu'à une position d'arrêt préconfigurée lorsque le robot (10) est appelé par un dispositif d'appel sans fil (20) dans un mode de déplacement autonome ;
un module de commutation de mode (150) configuré pour faire passer le robot (10) du mode de déplacement autonome à un mode de reconfiguration de la position d'arrêt lorsqu'une condition de commutation prédéterminée est remplie alors que le robot (10) est en mode de déplacement autonome ; et **caractérisé par**
un module de configuration (160) configuré pour, lorsque le robot (10) est déplacé par une force extérieure dans le mode de reconfiguration de la position d'arrêt, déterminer une position de mouvement vers laquelle le robot (10) est déplacé par une force extérieure, et reconfigurer la position d'arrêt en position de mouvement ;
le module de commande (140) est en outre configuré pour commander le robot (10) afin qu'il se déplace vers la position d'arrêt reconfigurée au lieu de la position d'arrêt préconfigurée.

5. Le système de commande de robot de la revendication 4,
dans lequel le module de commutation de mode (150) est configuré pour, lorsqu'une commande de reconfiguration de la position d'arrêt est entrée par un dispositif d'entrée prédéterminé installé dans le robot (10) alors que le robot (10) est en mode de déplacement autonome, faire passer le robot (10) en mode de reconfiguration de la position d'arrêt ; et/ou
dans lequel le module de commutation de mode (150) est configuré pour faire passer le robot (10) en mode de reconfiguration de la position d'arrêt lorsque le robot (10) s'écarte de la position d'arrêt sous l'effet d'une force extérieure un nombre prédéterminé de ou plus ou pendant une période de temps prédéterminée ou plus après s'être déplacé jusqu'à la position d'arrêt ; et/ou
dans lequel le module de commutation de mode (150) est configuré pour faire passer le robot (10) en mode de reconfiguration de la position d'arrêt lorsque le robot (10) détecte un obstacle qui empêche le mouvement pendant qu'il se déplace vers la position d'arrêt en mode de déplacement autonome.

6. Le système de commande de robot (100) de la revendication 1 ou 4, dans lequel le robot (10) est un robot de service destiné à transporter des récipients de nourriture et de boisson dans un restaurant.

7. Un dispositif d'appel sans fil (20) pour appeler un robot (10) équipé du système de commande de robot (100) selon la revendication 3 ou 4, comprenant :
un bouton d'appel (21) ; et
un module d'appel (22) configuré pour transmettre au robot (10) une commande d'appel comprenant des informations d'identification correspondant au dispositif d'appel sans fil lorsque le bouton d'appel est enfoncé pour commander au robot (10) de se déplacer jusqu'à une position d'arrêt correspondant aux informations d'identification.

8. Le dispositif d'appel sans fil (20) de la revendication 7, dans lequel le module d'appel (22) est configuré pour transmettre la commande d'appel au robot (10) lorsque le bouton d'appel est enfoncé plusieurs fois, longtemps ou brièvement, et qu'un modèle prédéterminé est formé par la durée de chaque pression ou la durée de l'intervalle de temps entre les pressions.

9. Le dispositif d'appel sans fil (20) pour appeler un robot (10) équipé du système de commande de robot (100) selon la revendication 3 ou 4, comprenant :
un lecteur d'étiquette (23) configuré pour reconnaître une étiquette située à l'extérieur du dispositif d'appel sans fil (20) ; et
un module d'appel (22) configuré pour, lorsqu'une étiquette est reconnue par le lecteur d'étiquettes (23), transmettre une commande d'appel comprenant des informations d'identification correspondant à l'étiquette reconnue au robot (10) afin de commander le robot (10) pour qu'il se déplace jusqu'à une position d'arrêt correspondant aux informations d'identification.

10. Une méthode de commande de robot exécutée par un système de commande de robot (100) installé dans un robot (10) qui commande le robot (10), comprenant :
commander le robot (10) pour qu'il se déplace le long d'un trajectoire de déplacement autonome préconfiguré dans un mode de déplacement autonome ;
faire passer le robot (10) du mode de déplacement autonome à un mode de reconfiguration du trajectoire de déplacement lorsqu'une condition de commutation prédéterminée est satisfaite alors que le robot (10) est en mode de déplacement autonome ; **caractérisé en ce que**
lorsque le robot (10) est déplacé par une force extérieure dans le mode de reconfiguration de la trajectoire de déplacement, suivre une trajectoire de déplacement pendant que le robot (10) est déplacé par la force extérieure, et reconfigurer la trajectoire de déplacement autonome sur la base de la trajectoire de déplacement suivie ;
commander le robot (10) pour qu'il se déplace de manière autonome le long de la voie de déplacement autonome reconfigurée.

11. La méthode de commande de robot selon la revendication 10,
dans lequel la commutation du robot (10) du mode de déplacement autonome au mode de reconfiguration du trajectoire de déplacement lorsque la condition de commutation prédéterminée est satisfaite alors que le robot (10) est en mode de déplacement autonome comprend la commutation robot (10) au mode de reconfiguration du trajectoire de déplacement lorsqu'une commande de reconfiguration du trajectoire de déplacement est entrée par l'intermédiaire d'un dispositif d'entrée prédéterminé installé dans le robot (10) alors que le robot (10) est en mode de déplacement autonome ; et/ou
dans lequel la commutation du robot (10) du mode de déplacement autonome au mode de reconfiguration du trajectoire de déplacement lorsque la condition de commutation prédéterminée est satisfaite alors que le robot (10) est en mode de déplacement autonome comprend la commutation du robot (10) au mode de reconfiguration du trajectoire de déplacement lorsque le robot (10) détecte un obstacle qui empêche le déplacement tout en se déplaçant le long du trajectoire de déplacement autonome dans le mode de déplacement autonome.

12. La méthode de contrôle de robot de la revendication 10, dans laquelle la commutation du robot (10) du mode de déplacement autonome au mode de reconfiguration du trajectoire de déplacement lorsque la condition de commutation prédéterminée est satisfaite alors que le robot (10) est en mode de déplacement autonome comprend la commutation robot (10) au mode de reconfiguration du trajectoire de déplacement lorsque le robot (10) dévie du trajectoire de déplacement autonome par une force externe un nombre prédéterminé de fois ou plus ou pendant une période de temps prédéterminée ou plus alors que le robot (10) est en mode de déplacement autonome.

13. Une méthode de commande de robot exécutée par un système de commande de robot (100) installé dans un robot (10) qui commande le robot (10), comprenant :
commander le robot (10) pour qu'il se déplace jusqu'à une position d'arrêt préconfigurée lorsque le robot (10) est appelé en mode de déplacement autonome ;
faire passer le robot (10) du mode de déplacement autonome à un mode de reconfiguration de la position d'arrêt lorsqu'une condition de commutation prédéterminée est satisfaite alors que le robot (10) est en mode de déplacement autonome ; **caractérisé en ce que**
lorsque le robot (10) est déplacé par une force extérieure dans le mode de reconfiguration de la position d'arrêt, déterminer une position de mouvement vers laquelle le robot (10) est déplacé par une force extérieure et reconfigurer la position d'arrêt en position de mouvement ;
commander le robot (10) pour qu'il se déplace jusqu'à la position d'arrêt reconfigurée au lieu de la position d'arrêt préconfigurée.

14. Un programme informatique installé dans un appareil de traitement de données et stocké sur un support d'enregistrement non transitoire pour exécuter la méthode selon l'une des revendications 10 à 13.

15. Support d'enregistrement non transitoire lisible par ordinateur dans lequel est enregistré un programme d'ordinateur pour l'exécution de la méthode selon l'une des revendications 10 à 13.
